Europäisches Patentamt

European Patent Office

Office européen des brevets

(11) Numéro de publication: **0 119 106**
**B1**

# (12) FASCICULE DE BREVET EUROPEEN

(45) Date de publication du fascicule du brevet:
09.04.86

(51) Int. Cl.⁴: **D 06 F 75/28, H 02 G 11/02**

(21) Numéro de dépôt: 84400009.1

(22) Date de dépôt: 04.01.84

(54) Enrouleur escamotable pour ranger le cordon d'alimentation d'un fer à repasser électrique et fer à repasser comportant un tel enrouleur.

(30) Priorité: 19.01.83 FR 8300765

(43) Date de publication de la demande:
19.09.84 Bulletin 84/38

(45) Mention de la délivrance du brevet:
09.04.86 Bulletin 86/15

(84) Etats contractants désignés:
BE DE FR GB IT NL SE

(56) Documents cités:
CH - A - 254 220
DE - A - 3 020 666
DE - B - 3 003 309
DE - U - 7 609 526
DE - U - 8 203 422
GB - A - 2 089 766
US - A - 3 689 868

(73) Titulaire: SEB S.A., F-21260 Selongey (FR)

(72) Inventeur: Schwob, Pierre, 55, avenue des Frères Lumière, F-69008 Lyon (FR)

(74) Mandataire: Bouju, André, Cabinet Bouju 38 avenue de la Grande Armée, F-75017 Paris (FR)

LIBER, STOCKHOLM 1986

## Description

Enrouleur escamotable pour ranger le cordon d'alimentation d'un fer à repasser électrique et fer à repasser comportant un tel enrouleur.

L'invention a pour objet un enrouleur escamotable pour ranger le cordon d'alimentation d'un fer à repasser électrique dont la semelle est liée à un capot qui la coiffe et qui porte un poignée, cet enrouleur comportant un support autour. duquel on enroule le cordon d'alimentation, et deux organes d'arrêt pour retenir les spires de ce cordon dans la direction de leur axe d'enroulement.

L'invention a également pour objet un fer à repasser électrique comportant un enrouleur escamotable.

Les enroulers connus dans l'art antérieur, pour ranger le cordon d'alimentation d'un appareil électroménager sont soit du type rotatif et comportant alors une bobine sur laquelle le cordon est enroulé, ce qui est admissible sur un appareil encombrant tel qu'un aspirateur, soit du type rixe (Voir modèle d'utilité DE—U—8203422), avec un encombrement "hors-tout" invariable correspondant à celui du cordon enroulé, ce qui est inadmissible dans le cas d'un petit appareil tel qu'un fer à repasser qui ne peut s'accommoder de la présence permanente d'un support d'enroulement aussi encombrant, donc gênant. Il est connu du DE—A—3 020 666 un enrouleur escamotable pour appareil éléctrique de ménage pouvant coulisser sur l'appareil. Toutefois cet enrouleur possède en encombrement "hors-tout" invariable.

La présente invention a pour but de réaliser, pour un fer à repasser du genre mentionné au début, un enrouleur escamotable qui ne constitue pas une gêne lors de l'utilisation du fer à repasser, et qui permet de ranger commodément le cordon d'alimentation après utilisation.

L'enrouleur visé par l'invention comporte un support autour duquel on enroule le cordon d'alimentation, et deux organes d'arrêt pour retenir les spires de ce cordon dans la direction de leur axe d'enroulement, le premier organe d'arrêt étant constitué par une plaque qui porte une série de bras constituant ledit support, destiné à être entouré par les spires du cordon qu'il supporte à l'état enroulè, tandis que le deuxième organe d'arrêt est constitué par la face arrière du capot.

Suivant l'invention, cet enrouleur est caractérisé en ce que le deuxième organe d'arrêt est doté de trous dans lesquels lesdits bras sont engagés à coulissement et en ce qu'un moyen de traction élastique situé entre les bras relie la face d'arrêt à la plaque d'arrêt en sollicitant celle-ci vers celle-là.

Avec une telle disposition, lorsqu'on enroule le cordon d'alimentation sur les bras constituant le support des spires d'enroulement, la plaque s'écarte de la face arrière du capot au fur et à mesure de la progression de l'enroulement, et l'enrouleur prend son encombrement maximum lorsque la totalité du cordon d'alimentation y est rangée. Inversement, lorsqu'on déroule le cordon d'alimentation, avant d'utiliser le fer à repasser, la plaque qui est toujours sollicitée par le moyen de traction élastique se rapproche automatiquement de la face arrière du capot au fur et à mesure de la diminution du nombre des spires, et finit par s'appliquer contre cette face arrière lorsque le cordon est entièrement déroulé, de sorte que cette plaque ne peut pas gêner l'utilisateur manoeuvrant le fer à repasser pendant l'utilisation.

Les bras qui font office de support ou mandrin d'enroulement peuvent en principe être au nombre de deux seulement. Toutefois, pour conférer aux spires une longueur aussi grande possible afin de minimaliser le nombre des spires, il est préférable que les bras constituent ensemble un contour d'enroulement polygonal et soient par conséquent en nombre plus élevé, ce qui facilité d'ailleurs leur glissement en évitant tout risque de coincement de ces bras lors de lèur coulissement dans les trous de la face arrière du capot. C'est pourquoi dans une forme de réalisation préférée, l'invention prévoit que les trous ainsi que les bras qu'ils reçoivent, sont au nombre de cinq et sont disposés comme suit:

— deux d'entre eux sont disposés symétriquement par rapport au plan de symétrie vertical du fer à repasser,

— deux autres sont disposés avec la même symétrie que les deux précédents mais sont situés plus bas que ceux-ci, et

— le cinquième trou est situé plus bas que les quatre précédents, et le plan de symétrie vertical du fer à repasser le coupe sensiblement en son milieu.

Il est alors avantageux que les trous et les bras qu'ils reçoivent aient des sections allongées qui, vues en projection sur un plan vertical perpendiculaire au plan de symétrie vertical du fer à repasser, ont chacune la forme d'un rectangle oblong, les grands côtés des quatre rectangles correspondant aux quatre trous disposés par paires symétriques étant inclinés par rapport à la trace dudit plan vertical de symétrie, tandis que, le grand côté du rectangle correspondant au cinquième trou est sensiblement perpendiculaire à ladite trace.

Ainsi, les efforts auxquels l'enrouleur est soumis lorsque l'utilisateur enroule le cordon sur les bras coulissant dans les trous sont répartis sur des surfaces de contact étendues, cela quelle que soit la direction de l'effort instantané, de sorte que la pression de contact des bras contre les parois des trous n'est jamais excessive et n'empêche pas leur coulissement.

Le moyen de traction peut être constitué par un ressort de traction en fil métallique. Toutefois, la rupture éventuelle d'un tel organe pourrait présenter de multiples inconvénients, tant du point de vue électrique que du point de vue de la sauvegarde de l'objet repassé. C'est pourquoi il est préférable que le moyen de traction soit un ressort de traction réalisé en élastomère, et que, pour la fixation de celui-ci, la plaque comporte, en saillie sur sa face en regard du capot un crochet tandis que le capot comporte, en face de ce crochet un organe d'accrochage.

Dans la forme de réalisation préférée, ledit ressort de traction en élastomère est un simple anneau élastique en caoutchouc, et la face arrière du capot comporte, en face du crochet, une ouverture sur l'un des bords de laquelle est formé un bras pénétrant à l'intérieur du capot et portant lui-même un doigt qui constitue ledit organe d'accrochage et qui est situé en face du crochet.

Ainsi, le point de fixation du ressort côté fer se trouve éloigné de la plaque, ce qui permet à ce ressort d'exercer une force encore importante pour solliciter la plaque contre la face arrière du fer lorsque le cordon d'alimentation n'est pas enroulé.

Enfin, du point de vue de l'esthétique, il est avantageux que la plaque et la face arrière du capot aient des contours de formes et dimensions identiques.

D'autres particularités et avantages de l'invention apparaîtront encore dans la description ci-après.

Sur les dessins annexés, donnés à titre d'exemples non limitatifs:

— la figure 1 représente une vue d'ensemble d'un fer à repasser équipé d'un enrouleur selon l'invention, le cordon d'alimentation étant rangée sur cet enrouleur,

— la figure 2 représente, à une échelle différente, le capot du fer à repasser équipé de l'enrouleur selon l'invention, et vu en coupe partielle selon le plan de symétrie longitudinal du fer,

— la figure 3 représente une vue en élévation de la face arrière du capot,

— la figure 4 représente une vue en élévation de la face avant, côté fer, de la plaque; et

— la figure 5 est une vue en perspective de la plaque mobile munie des bras servant de support d'enroulement.

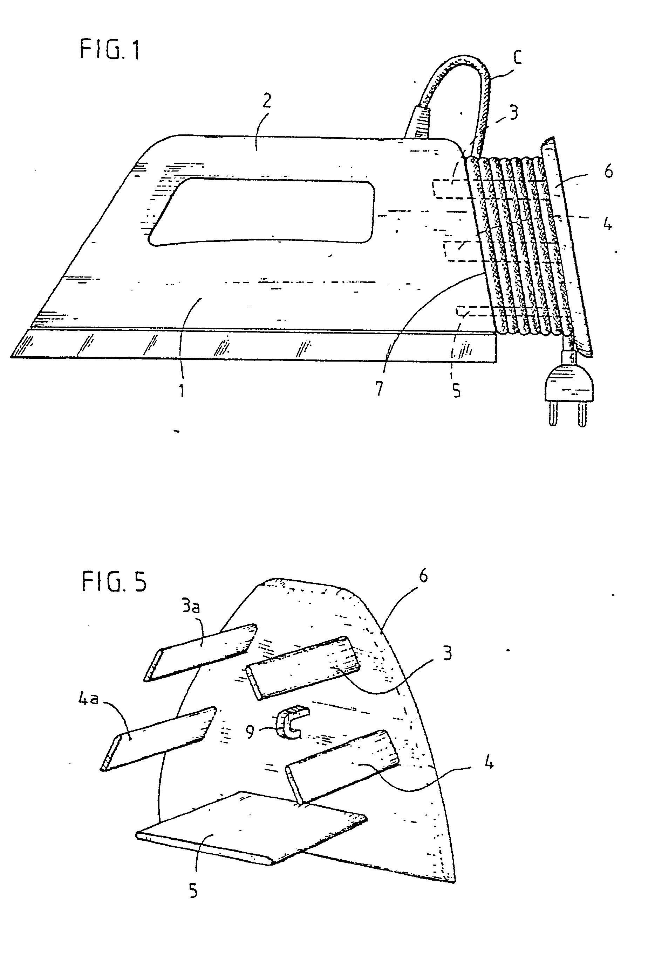

Sur la figure 1, le cordon d'alimentation C est représenté enroulé. Ses spires sont retenues, dans la direction de leur axe d'enroulement, par deux organes d'arrêt 6 et 7 qui assument alors les mêmes fonctions que les deux joues d'une bobine. Le premier de ces organes d'arrêt est constitué par une plaque 6, et le deuxième par la face arrière 7 du capot 1 coiffant la semelle chauffée et doté d'une poignée 2.

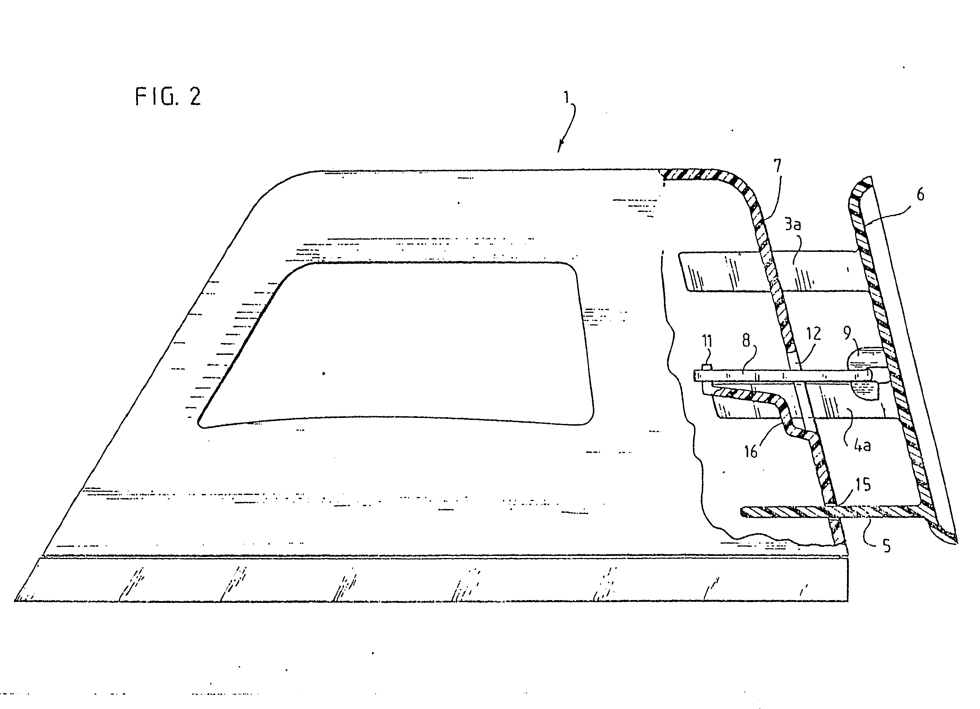

Selon l'invention, comme on peut le voir sur la figure 2, ce sont des bras 3, 4 et 5 qui servent à supporter les spires formées par le cordon d'alimentation à l'état enroulé. Ces bras sont en saillie sur une même face de la plaque 6 dont ils sont solidaires. Ces bras coulissent dans la face arrière 7 du capot 1. Un moyen de traction élastique 8, constitué par un anneau en caoutchouc, relie le capot 1 à la plaque 6 qu'il sollicite vers ce capot. L'examen combiné des figures 2, 3 et 4 permet de voir que, dans cet exemple, les bras sont au nombre de cinq et sont engagés à coulissement dans cinq trous correspondants aménagés dans la face arrière 7 du capot. Ces trous, ainsi que les bras qu'ils reçoivent, sont disposés comme suit:

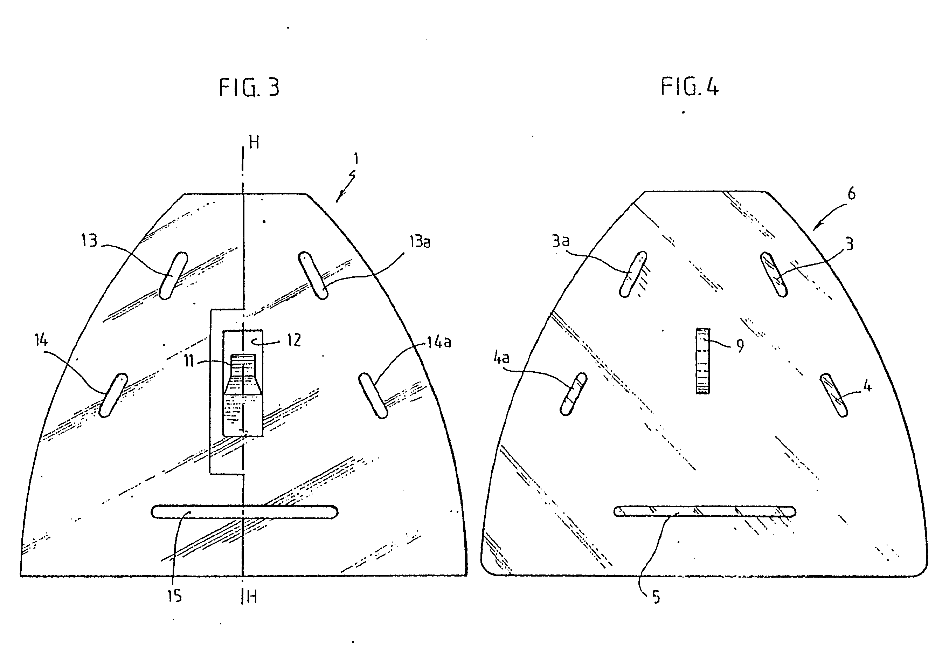

— deux d'entre eux, 13 et 13a sont disposés symétriquement par rapport au plan de symétrie vertical du fer à repasser (la trace de ce plan de symétrie est représentée par l'axe de symétrie vertical H—H sur la figure 3),

— deux autres trous 14, 14a sont disposés avec la même symétrie que les deux précédents mais sont situés plus bas que ceux-ci, et

— le cinquième trou 15 est à un niveau inférieur aux précédents, et le plan de symétrie vertical (trace H—H) du fer à repasser le coupe sensiblement en son milieu.

Les trous 13, 13a; 14, 14a; 15 et les bras correspondants 3, 3a; 4, 4a; 5 qu'ils reçoivent ont, dans cet exemple, des sections allongées qui — vues en projection sur le plan de la figure 3 ou sur le plan de la figure 4, c'est-à-dire vues en projection sur un plan vertical perpendiculaire au plan de symétrie vertical du fer à repasser — ont chacune la forme d'un rectangle oblong. Ici, les trous sont donc des fentes, tandis que les bras sont des languettes coulissant dans ces fentes. Les grands côtés des quatre rectangles correspondants aux quatre trous ou fentes disposés par paires symétriques 13—13a, 14—14a sont inclinés par rapport à la trace H—H du plan de symétrie vertical. Par contre, le grand côté du rectangle correspondant au cinquième trou (fente 15) est sensiblement perpendiculaire à cette trace H—H qui le coupe en son milieu.

Comme on peut le voir notamment sur les figures 2 et 4, la plaque 6 comporte, en saillie sur sa face en regard du capot 1, un crochet 9 auquel le ressort de traction constitué par un anneau en caoutchouc est attaché. Le capot 1 comporte, en face de ce crochet, un organe d'accrochage 11 auquel est attaché l'autre extrémité du ressort en caoutchouc 8. L'examen combiné des figures 2 et 3 montre que l'anneau élastique 8, passé sur le crochet 9 et sur l'organe d'accrochage 11, traverse une ouverture 12 aménagée dans la face arrière 7 du capot 1. Sur un bord de cette ouverture, ici le bord inférieur, est formé un bras 16 pénétrant à l'intérieur du capot et portant un doigt qui le termine en constituant l'organe d'accrochage 11 situé en face du crochet 9.

Ce capot 1 est avantageusement réalisé en matière plastique moulée. Il est alors constitué de deux parties obtenues par injection-moulage. Elles sont symétriques avec cette exception que l'une d'elles comporte, côté face arrière, un contour dont une partie déborde au-delà du plan de symétrie vertical du fer à repasser, afin de réaliser le bras 16 et le doigt d'accrochage 11 en même temps que cette moitié de capot. L'autre moitié de capot comporte, côté face arrière, un contour complémentaire. Sur la figure 3, on peut voir la ligne de joint de ces deux moitiés de capot assemblées.

De même, la plaque 6, dont le contour est avantageusement identique à celui de la face arrière 7 du capot, peut être réalisée d'une seule pièce en matière plastique (moulée par injection) avec les bras 3, 3a; 4—4a; 5 et le crochet 9. La figure 5 représente une telle pièce avant son montage sur le capot du fer à repasser. Bien entendu, la plaque 6 pourrait aussi comporter des ajours ou des échancrures lui donnant par exemple l'aspect d'une étoile dont le centre porterait le crochet 9 et les rayons porteraient les bras 3—3a; 4—4a; 5.

## Revendications

1. Enrouleur escamotable, pour ranger le cordon d'alimentation (C) d'un fer à repasser électrique dont la semelle est liée à un capot (1) qui la coiffe et qui porte éventuellement une poignée (2), cet enrouleur comportant un support (3, 3a; 4, 4a; 5), autour duquel on enroule le cordon d'alimentation (C), et deux organes d'arrêt (6, 7) pour retenir les spires de ce cordon dans la direction de leur axe d'enroulement, le premier organe d'arrêt étant constitué par une plaque (6) qui porte une série de bras (3, 3a; 4, 4a; 5) constituant ledit support, destiné à être entouré par les spires du cordon qu'il supporté à l'étant enroulé, tandis que le deuxième organe d'arrêt (7) est constitué par la face arrière du capot (1), cet enrouleur étant caractérisé en ce que le deuxième organe d'arrêt (7) est doté de trous (13, 13a; 14, 14a; 15) dans lesquels les dits bras (3, 3a; 4, 4a; 5) sont engagés à coulissement et en ce qu'un moyen de traction élastique (8) situé entre les bras relie la plaque d'arrêt (7) à la plaque d'arrêt (6) en sollicitant celle-ci vers celle-là.

2. Enrouleur selon la revendication 1, caractérisé en ce que les trous (13, 13a; 14, 14a; 15), ainsi que les bras (3, 3a; 4, 4a; 5) qu'ils reçoivent, sont au nombre de cinq et sont disposés come suit:
— deux (13, 13a) d'entre eux sont disposés symétriquement par rapport au plan de symétrie vertical du fer à repasser,
— deux autres (14, 14a) sont disposés avec la même symétrie que les deux précédents (13, 13a), mais sont situés plus bas que ceux-ci,
— le cinquième trou (15) est situé plus bas que les quatre précédents, et le plan de symétrie vertical du fer à repasser le couple sensiblement en son milieu.

3. Enrouleur selon la revendication 2, caractérisé en ce que les trous (13, 13a; 14, 14a; 15) et les bras (3, 3a; 4, 4a; 5) qu'ils reçoivent ont des sections allongées qui, vues en projection sur un plan vertical perpendiculaire au plan de symétrie vertical du fer à repasser, ont chacune la forme d'un rectangle oblong, les grands côtés des quatre rectangles correspondant aux quatre trous disposés par paires symétriques (13, 13a; 14, 14a) étant inclinés par rapport à la trace (H—H) dudit plan vertical de symétrie, tandis que le grand côté du rectangle correspondant au cinquième trou (15) est sensiblement perpendiculaire à ladite trace (H—H).

4. Enrouleur selon l'une quelconque des revendications 1 à 3, caractérisé en ce que ledit moyen de traction (8) est un ressort en élastomère, et en ce que, pour la fixation de celui-ci, la plaque (6) comporte, en saillie sur sa face en regard du capot (1) un crochet (9), tandis que le capot (1) comporte, en face de ce crochet (9), un organe d'accrochage (11).

5. Enrouleur selon les revendications 3, et 4, caractérisé en ce que ledit ressort de traction en élastomère (8) est an anneau élastique en caoutchouc, et en ce que la face arrière (7) du capot (1) comporte, en face du crochet (9), une ouverture (12) sur l'un des bords de laquelle est formé un bras (16) pénétrant à l'intérieur du capot (1) et portant lui-même un doigt (11) qui constitue ledit organe d'accrochage et qui est situé en face du crochet (9).

6. Enrouleur selon l'une quelconque des revendications précédentes, caractérisé en ce que la plaque (6) et la face arrière (7) du capot (1) ont des contours de formes et dimensions identiques.

7. Fer à repasser électrique comportant un enrouleur escamotable selon l'une quelconque des revendications précédentes.

## Patentansprüche

1. Einschiebbare Aufrollvorrichtung zur Aufbewahrung des Anschlußkabels (C) eines elektrischen Bügeleisens, dessen Heizplatte mit einer auf sie aufgesetzten Haube (1) verbunden ist und gegebenenfalls einen Handgriff (2) trägt, wobei diese Aufrollvorrichtung einen Halter (3, 3a; 4, 4a; 5) umfaßt, um den herum das Anschlußkabel (C) aufwickelbar ist, und zwei Begrenzungselemente (6, 7) zum Halten der Windungen dieses Kabels in Richtung ihrer Aufrollachse umfaßt, wobei das erste Begrenzungselement durch eine Platte (6) gebildet ist, welche eine Reihe von den genannten Halter bildenden Armen (3, 3a; 4, 4a; 5) trägt, um von den Windungen des hierdurch im aufgerollten Zustand getragenen Kabels umgeben zu werden, während das zweite Begrenzungselement (7) durch die Rückseite der Haube (1) gebildet ist, wobei diese Aufwickelvorrichtung dadurch gekennzeichnet ist, daß das zweite Begrenzungselement (7) mit Löchern (13, 13a; 14, 14a; 15) versehen ist, in welche die genannten Arme (3, 3a; 4, 4a; 5) gleitverschiebbar eingesetzt sind, und daß ein elastisches Zugmittel (8), welches zwischen den Armen gelegen ist, die Begrenzungsplatte (7) mit der Begrenzungsplatte (6) verbindet, in dem es letztere gegen erstere beaufschlagt.

2. Aufrollvorrichtung nach Anspruch 1, dadurch gekennzeichnet, daß die Anzahl der Löcher (13, 13a; 14, 14a; 15) und der von ihnen aufgenommenen Arme (3, 3a; 4, 4a; 5) fünf beträgt und diese folgendermaßen angeordnet sind:
— zwei von ihnen (13, 13a) sind symmetrisch in bezug auf die vertikale Symmetrieebene des Bügeleisens angeordnet,
— zwei weitere (14, 14a) sind mit derselben Symmetrie wie die beiden vorgenannten (13, 13a) angeordnet, jedoch niedriger als diese gelegen,
— das fünfte Loch (15) liegt tiefer als die vier vorgenannten, und die vertikale Symmetrieebene des Bügeleisens schneidet es etwa in seiner Mitte.

3. Aufrollvorrichtung nach Anspruch 2, dadurch gekennzeichnet, daß die Löcher (13, 13a; 14, 14a;

15) und die von ihnen aufgenommenen Arme (3, 3a; 4, 4a; 5) gestreckte Querschnitte aufweisen, die in der Projektion auf eine vertikale Ebene, welche senkrecht zur vertikalen Symmetrieebene des Bügeleisens ist, jeweils die Form eines gestreckten Rechtecks aufweisen, wobei die langen Seiten der vier Rechtecke, welche den vier als symmetrische Paare angeordneten Löchern (13, 13a; 14, 14a; 15) entsprechen, gegenüber der Spur (H—H) der genannten vertikalen Symmetrieebene geneigt sind, während die lange Seite des dem fünften Loch (15) entsprechenden Rechtecks im wesentlichen senkrecht zu der genannten Spur (H—H) ist.

4. Aufrollvorrichtung nach einem der Ansprüche 1 bis 3, dadurch gekennzeichnet, daß das genannte Zugmittel (8) eine Feder aus einem Elastomer ist und daß zur Befestigung derselben die Platte (6) auf ihrer der Haube (1) zugewandten Fläche herausragend einen Haken (9) aufweist, während die Haube (1) gegenüber diesem Haken (9) ein Einhakorgan (11) umfaßt.

5. Aufrollvorrichtung nach den Ansprüchen 3 und 4, dadurch gekennzeichnet, daß die genannte Zugfeder aus einem Elastomer (8) ein elastischer Gummiring ist und daß die Rückseite (7) der Haube (1) gegenüber dem Haken (9) eine Öffnung (12) aufweist, an deren einem Rand ein Arm (16) gebildet ist, welcher in das Innere der Haube (1) eindringt und seinerseits einen Finger (11) trägt, der das genannte Einhakorgan bildet und sich gegenüber dem Haken (9) befindet.

6. Aufrollvorrichtung nach einem der vorstehenden Ansprüche, dadurch gekennzeichnet, daß die Platte (6) und die Rückseite (7) der Haube (1) Konturen von gleicher Form und gleichen Abmessungen aufweisen.

7. Elektrisches Bügeleisen, welches eine einschiebbare Aufrollvorrichtung nach einem der vorstehenden Ansprüche aufweist.

## Claims

1. A retractable reel to receive the supply cord (C) of an electric iron, the baseplate of which is connected to a casing (1) which surmounts it and which may have a handle (2), the said reel comprising a support (3, 3a; 4, 4a; 5) around which the supply cord (C) is wound, and two retaining means (6, 7) to retain the turns of the cord in the direction of their winding axis, the first retaining means comprising a plate (6) which bears a series of arms (3, 3a; 4, 4a; 5) constituting the said support, around which are to be wound the turns of the cord which it supports in the wound state, while the second retaining means (7) comprises the rear face of the casing (1), said reel being characterised in that the second retaining means (7) is formed with apertures (13, 13a; 14, 14a; 15) in which the said arms (3, 3a; 4, 4a; 5) are slidably engaged and in that an elastic traction means (8) disposed between the arms connects the retaining plate (7) to the retaining plate (6) and urges the latter towards the former.

2. A reel according to claim 1, characterised in that the apertures (13, 13a; 14, 14a; 15) and the arms (3, 3a; 4, 4a; 5) which they receive are five in number and are disposed as follows:
— two (13, 13a) of them are disposed symmetrically with respect to the vertical plane of symmetry of the iron,
— two others (14, 14a) are disposed with the same symmetry as the first two (13, 13a) but are situated lower than they are,
— the fifth aperture (15) is situated lower than the previous four and the vertical plane of symmetry of the iron intersects it substantially at its centre.

3. A reel according to claim 2, characterised in that the apertures (13, 13a; 14, 14a; 15) and the arms (3, 3a; 4, 4a; 5) which they receive have elongate sections which, as considered in projection on to a vertical plane perpendicular to the vertical plane of symmetry of the iron, each have the form of an oblong rectangle, the major sides of the four rectangles which correspond to the four apertures disposed in symmetrical pairs (13, 13a; 14, 14a; 15) being inclined to the trace (H—H) of said vertical plane of symmetry while the major side of the rectangle corresponding to the fifth aperture (15) is substantially perpendicular to said trace (H—H).

4. A reel according to any one of claims 1 to 3, characterised in that the said traction means (8) is a spring made of an elastomer and in that to fix the same the plate (6) has a hook (9) projecting from its surface opposite the casing (1) while the latter (1) has an engagement means (11) opposite said hook (9).

5. A reel according to claims 3 and 4, characterised in that the elastomeric traction spring (8) is an elastic rubber ring and in that the rear surface (7) of the casing (1) has an aperture (12) opposite the hook (9), one of the edges of the aperture being formed with an arm (16) which engages inside the casing (1) and itself bears a lug (11) which forms the said engagement means and which is situated opposite the hook (9).

6. A reel according to any one of the preceding claims, characterised in that the plate (6) and the rear surface (7) of the casing (1) have identical contours of shapes and dimensions.

7. An electric iron comprising a retractable reel according to any one of the preceding claims.

FIG. 1

FIG. 5

FIG. 2

FIG. 3

FIG. 4

0 119 106